Europäisches Patentamt

European Patent Office

Office européen des brevets

(11) Veröffentlichungsnummer: **0 617 071 A2**

## (12) EUROPÄISCHE PATENTANMELDUNG

(21) Anmeldenummer: **94104280.6**

(22) Anmeldetag: **18.03.94**

(51) Int. Cl.⁵: **C08G 65/44**

(30) Priorität: **24.03.93 DE 4309545**

(43) Veröffentlichungstag der Anmeldung:
**28.09.94 Patentblatt 94/39**

(84) Benannte Vertragsstaaten:
**BE DE FR GB NL**

(71) Anmelder: **BASF Aktiengesellschaft**
**Carl-Bosch-Strasse 38**
**D-67063 Ludwigshafen (DE)**

(72) Erfinder: **Gottschalk, Axel, Dr.**
**Hirschhornring 33**
**D-67435 Neustadt (DE)**
Erfinder: **Seitz, Friedrich, Dr.**
**Von-Wieser-Strasse 1**
**D-67159 Friedelsheim (DE)**
Erfinder: **Lotz, Andreas**
**Rotenberg 16**
**D-35037 Marburg (DE)**
Erfinder: **Heitz, Walter, Prof. Dr.**
**Am Schmidtborn 5**
**D-35274 Kirchhain (DE)**

(54) **Verfahren zur Herstellung von Polyphenylenethern.**

㊥ Verfahren zur Herstellung von Polyphenylenethern aus einwertigen Phenolen, die in den beiden ortho-Stellungen oder zusätzlich in einer meta-Position, nicht aber in para-Stellung Alkylsubstituenten aufweisen durch oxidative Kupplung mit sauerstoffhaltigen Gasen in Gegenwart eines Oxidationskatalysators und einer Verbindung, welche das Molekulargewicht regelt, in organischen Lösungsmitteln, dadurch gekennzeichnet, daß man als Molekulargewichtsregler eine aliphatische, aromatische oder cycloaliphatische Mono- oder Dicarbonsäure mit 1 bis 24 C-Atomen verwendet.

EP 0 617 071 A2

Die Erfindung betrifft ein verbessertes Verfahren zur Herstellung von Polyphenylenethern aus einwertigen Phenolen, die in den beiden ortho-Stellungen oder zusätzlich in einer meta-Position, nicht aber in para-Stellung Alkylsubstituenten aufweisen durch oxidative Kupplung mit sauerstoffhaltigen Gasen in Gegenwart eines Oxidationskatalysators und einer Verbindung, welche das Molekulargewicht regelt in organischen Lösungsmitteln.

Polyphenylenether und deren Verfahren zur Herstellung sind in den US-Patentschriften 3 306 874, 3 306 875 und 3 432 466 offenbart. Die für die Herstellung von Polyphenylenethern verwendeten Verfahren basieren vorwiegend auf der Selbstkondensation eines monovalenten Phenols in Anwesenheit eines sauerstoffhaltigen Gases und eines Katalysators.

Die Kontrolle des Molekulargewichtes des entstehenden Polyphenylenethers ist hierbei ein wichtiger Aspekt in der Verfahrensführung, da das entstehende Polymer ein möglichst definiertes Molgewicht aufweisen sollte, wobei die Molekulargewichtsverteilung möglichst eng sein sollte. Dies erleichtert u.a. die Verwendung dieser Polymeren, insbesondere in Abmischung mit anderen Polymeren bei der Herstellung von Blendzusammensetzungen, da je nach Molgewicht andere Eigenschaften erzielt werden können. Das Molekulargewicht während der Polykondensation zu kontrollieren ist jedoch nicht einfach, da bei Beginn der Molekulargewichtsaufbau relativ langsam und gegen Ende der Reaktion sehr schnell verläuft. Es kommt erschwerend hinzu, daß gegen Ende der Reaktion der Molekulargewichtsaufbau vom verbleibenden aktiven Anteil des Katalysators abhängt, welcher von der Temperaturführung und Sauerstoffgehalt in der Lösung usw. abhängig ist.

Aus der US-A 3 440 217 ist es bekannt, Phenole, welche in para-Stellung substituiert sind, als Molekulargewichtsregler einzusetzen.

Aus der JP-A 73/24 520 ist es bekannt, organische Phosphate als Regler einzusetzen.

Aus der EP-A 113 430 ist es ferner bekannt, Phenole mit elektronenziehenden Substituenten (F, Cl, Br, CN, OH, COOH, $NO_2$) als Regler zu verwenden.

Die Verfahren weisen den Nachteil auf, daß der Regler nur im begrenzten Umfang wirksam ist, wobei diese Zusätze teilweise darüber hinaus zu kostenintensiv sind.

Aus der US-A 4 059 568 ist es bekannt durch die Kontrolle der Reaktionsgeschwindigkeit und anschließender Fällung unter Zugabe von Wasser, das Molekulargewicht zu regeln. Nachteile hierbei sind, das die Regelung zu ungenau ist und die Abwassermengen (bestehend aus organischen Lösungsmitteln, Wasser etc.), welche anschließend aufbereitet werden müssen, sehr groß sind.

Ferner ist aus der US-A 4 196 278 bekannt, das Molgewicht durch eine zweite Monomerzugabe zu kontrollieren. Hierbei wird die Verfahrensführung sehr umständlich und ist insofern unwirtschaftlich. Die Kontrolle des Molgewichtes ist nicht zufriedenstellend.

Bei den bekannten Verfahren ist es außerdem von Nachteil, das die Ausbeute des Polymeren geringer wird.

Darüber hinaus ist es mit den bekannten Reglersystemen nicht möglich, niedermolekulares PPE in hohen Ausbeuten herzustellen. Nach F.J. Viersen, C. Challa, Recueil des Traveaux Chimiques des Pays-Bas, Bd. 109, S. 97-102, 1990 entsteht während der ersten 30 % des Umsatzes die größte Menge an unerwünschten Nebenprodukten (Diphenochinonbildung), welche dadurch insbesondere bei niedermolekularen Produkten eine Gelbfärbung verursachen.

Der vorliegenden Erfindung lag daher die Aufgabe zugrunde, einen Molekulargewichtsregler für die Polyphenylenethersynthese zur Verfügung zu stellen, der in wirksamen Mengen die Reaktion im gewünschten Maß kontrolliert, so daß eine effektive und möglichst genaue Einstellung des Molekulargewichtes erfolgt. Insbesondere die kontrollierte Herstellung von niedermolekularem PPE in hohen Ausbeuten sollte ermöglicht werden, ohne eine nachteilige Beeinflussung der Reaktionsgeschwindigkeit. Zudem sollte der hergestellte Polyphenylenether einen möglichst geringen Anteil an Nebenprodukten aufweisen sowie eine helle Eigenfarbe.

Demgemäß wurde ein Verfahren zur Herstellung von Polyphenylenethern aus einwertigen Phenolen, die in den beiden ortho-Stellungen oder zusätzlich in einer meta-Position, nicht aber in para-Stellung Alkylsubstituenten aufweisen, durch oxidative Kupplung mit sauerstoffhaltigen Gasen in Gegenwart eines Oxidationskatalysators und einer Verbindung, die das Molekulargewicht regelt, in organischen Lösungsmitteln gefunden, welches dadurch gekennzeichnet ist, daß man als Molekulargewichtsregler eine aliphatische, aromatische oder cycloaliphatische Mono- oder Dicarbonsäure mit 1 bis 24 C-Atomen vorzugsweise 1 bis 20 C-Atomen und insbesondere 1 bis 12 C-Atomen verwendet.

Als aliphatische Mono- oder Dicarbonsäuren können geradkettige oder verzweigte, ein- oder mehrfach ungesättigte oder gesättigte Säuren verwendet werden.

Beispiele für gesättigte Monocarbonsäuren sind Ameisensäure, Essigsäure, Propionsäure, sec-Propionsäure, Buttersäure, Isobuttersäure, t-Butylsäure, Valeriansäure, Capronsäure, Palanitsäure, Stearinsäu-

2

re, α-Methylbuttersäure, Octansäure, Laurinsäure, Pelargonsäure, wobei Essigsäure besonders bevorzugt ist.

Bevorzugt werden erfindungsgemäß ungesättigte Monocarbonsäuren verwendet, insbesondere solche, in denen die COOH-Gruppe α-ständig zur Doppelbindung steht.

Beispiele für ungesättigte Monocarbonsäuren sind Crotonsäure, Isocrotonsäure, Sorbinsäure, Vinylessigsäure, Ölsäure, Linolsäure, Linolensäure und Elaidinsäure, wobei Acrylsäure und Methacrylsäure bevorzugt sind.

Als Beispiele für gesättigte Dicarbonsäuren seien Oxalsäure, Adipinsäure, Glutarsäure, Dimethylglutarsäure, Azelainsäure und Weinsäure genannt, wobei Bernsteinsäure und Melonsäure besonders bevorzugt ist.

Ungesättigte Dicarbonsäuren, welche als Regler verwendet werden können, sind Mesaconsäure, Hydroxymaleinsäure, Hydroxyfumarsäure, wobei Fumarsäure und Maleinsäure bevorzugt sind.

Als aromatische Carbonsäuren seien Benzoesäure, Tolylsäure, Isophthalsäure, Terephthalsäure, Vinylterephthalsäure, Chlorbenzoesäure, Brombenzoesäuren, Nitrobenzoesäure, Dinitrobenzoesäure, Salicylsäure, Naphthalincarbonsäuren, Naphthalindicarbonsäuren, Phenylessigsäure, Mandelsäure und Zimtsäure genannt. Cycloaliphatische Säuren sind insbesondere Cyclohexansäuren.

Mischungen aus zwei oder mehreren erfindungsgemäßen Carbonsäuren können ebenfalls als Molekulargewichtsregler dienen.

Bevorzugt werden die Regler in Lösung eingesetzt. Als Lösungsmittel kommen vorzugsweise Alkohole, insbesondere Methanol und Ethanol oder Isopropanol in Betracht. Zusätzlich hat es sich als vorteilhaft erwiesen, daß der Regler sowohl mit dem Katalysatorsystem als auch mit dem jeweiligen eingesetzten Monomeren vorgelegt werden kann.

Die Mol-Äquivalente der aliphatischen Mono- oder Dicarbonsäuren bezogen auf 1 Mol Kupfer im Katalysatorkomplex betrugen im allgemeinen 0,01 bis 10, vorzugsweise 0,05 bis 5 und insbesondere 0,1 bis 1.

Die zur Herstellung der Polyphenylenethern verwendeten einwertigen Phenole, die in den beiden ortho-Stellungen oder zusätzlich in einer meta-Position, nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Bevorzugt ist hierbei 2,6-Dimethylphenol, das nach den in der Literatur (vgl. Houben-Weyl-Müller, Methoden der organischen Chemie, Phenole, Teil 2, Band 6/1, Georg Thieme Verlag, Stuttgart, 1976, S. 1187 ff. und dort zitierte Literatur) beschriebenen Methoden von den bei der Polymerisation störenden Phenolen, wie Phenol, o-Kresol, p-Kresol, m-Kresol und den mehrkernigen Phenolen, wie 2,6-Dimethyl-1-hydroxybiphenyl abgetrennt wird, eingesetzt.

Zur Ausführung der Polykondensation werden üblicherweise sauerstoffhaltige Gase oder Sauerstoff in die 10 bis 60, vorzugsweise 15 bis 50°C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist.

Bei den für die Polykondensation bekannten Oxidationskatalysatoren handelt es sich um ein System aus einer organischen Vrbindung und einem Metall, so z. B. Kombinationen aus einem Metall und Alkoholaten, Phenolaten, Amidinen oder Aminen. Vorzugsweise werden Kombinationen aus Aminen und einem Kupfersalz verwendet.

Die primäre, sekundäre oder tertiäre Aminkomponente des Katalysatorkomplexes entspricht denjenigen, die in den vorgenannten Hay-Patenten offenbart sind. Typische Vertreter derselben umfassen aliphatische Amine, in denen die aliphatische Gruppe geradkettige oder verzweigtkettige Kohlenwasserstoffe oder cycloaliphatische Kohlenwasserstoffe darstellen. Bevorzugt sind aliphatische Monoamine. Besonders bevorzugt sind Mono-, Di- und Trialkylamine, wobei die Alkylgruppen 1 bis 12 Kohlenstoffatome aufweisen. Typischerweise können Mono-, Di- und Trimethyl, Ethyl, n-Propyl, i-Propyl, n-butylsubstituierte Amine, Mono- und Dicyclohexylamin, Ethylmethylamin, Morpholin, N-alkyl-cycloaliphatische Amine wie N-Methylcyclohexylamin verwendet werden. Weiterhin können cyclische tertiäre Stickstoffbasen, wie Pyridin, alpha-Collidin, gamma-Picolin und dergleichen benutzt werden.

Mischungen solcher primärer, sekundärer und tertiärer Amine können falls gewünscht ebenfalls Anwendung finden. Ein besonders bevorzugtes Mono-Alkylamin ist n-Butylamin; ein besonders bevorzugtes Dialkylamin ist Di-n-butylamin; und ein besonders bevorzugtes Trialkylamin ist Triethylamin. Bevorzugte cyclische tertiäre Stickstoffbasen sind Pyridin und 4-Dimethylaminopyridin. Die Konzentration des primären und sekundären Amins in der Reaktionsmischung kann innerhalb weiter Grenzen variieren. Bevorzugt werden jedoch niedrige Konzentrationen. Ein bevorzugter Bereich umfaßt etwa 1 bis 30 Mol pro 100 Mol des monovalenten Phenols. Im Fall eines tertiären Amins ist der bevorzugte Bereich höher und umfaßt von

EP 0 617 071 A2

etwa 4 bis etwa 100 Mol pro 100 Mol des monovalenten Phenols.

Typische Beispiele der Kupfer-I-Salze und der Kupfer-II-Salze, die für das Verfahren geeignet sind, finden sich in den vorgenannten Hay-Patenten. Dieselben umfassen Kupfer-I-Chlorid, Kupfer-I-Bromid, Kupfer-I-Sulfat, Kupfer-I-Azid, Kupfer-I-Tetraminsulfat, Kupfer-I-Azetat, Kupfer-I-Butyrat, Kupfer-I-Toluat, Kupfer-II-Chlorid, Kupfer-II-Bromid, Kupfer-II-Sulfat, Kupfer-II-Azid, Kupfer-II-Tetraminsulfat, Kupfer-II-Azetat, Kupfer-II-Butyrat, Kupfer-II-Toluat und dergleichen. Bevorzugte Kupfer-I- und Kupfer-II-Salze sind die Halogenide, Alkanoate oder Sulfate, z. B. Kupfer-I-Bromid und Kupfer-I-Chlorid, Kupfer-II-Bromid und Kupfer-II-Chlorid, Kupfer-II-Fluorid und Kupfer-II-Azetat. Mit primären und sekundären Aminen wird die Konzentration der Kupfersalze wünschenswerterweise niedrig gehalten und sie varriert vorzugsweise von etwa 0,1 bis 1,5 Mol per 100 mol monovalentes Phenol. Mit tertiären Aminen wird das Kupfersalz vorzugsweise in einer Menge von etwa 1 bis etwa 5 Mol pro 100 Mol des einwertigen Phenols verwendet.

Der Anteil des Lösungsmittels liegt üblicherweise im Bereich 1 : 1 bis 20 : 1, d. h. maximal bis zu einem Überschuß des 20-fachen an Lösungsmittel, bezogen auf das Monomere. Geeignete Lösungsmittel sind $C_7$-$C_{10}$-Kohlenwasserstoffe wie Ethylbenzol, Xylol, Diethylbenzol oder dern Gemische, wobei vorzugsweise Ethylbenzol oder Toluol verwendet werden. Die Lösungsmittel werden bevorzugt im Bereich von 1 : 1 bis 10 : 1 Gew.-Teile, bezogen auf das monomere Phenol eingesetzt.

Falls erwünscht, kann der Reaktionsmischung ein Aktivator wie Diarylguanidin oder Diarylformamidin (s. US-PS 3 544 515) Reaktionsbeschleuniger oder Entschäumer zugegeben werden.

Die Polykondensation kann sowohl kontinuierlich als auch diskontinuierlich durchgeführt werden.

Die Polykondensationsreaktion wird insbesondere bei Temperaturen zwischen 15 und 35°C durchgeführt. Hierzu wird der Sauerstoff in die Lösung des Monomeren eingeleitet, wobei Oxidationskatalysator und der Reaktionsbeschleuniger in Lösung innerhalb eines Zeitraumes von 0,1 bis 1,5 Stunden, vorzugsweise von 0,1 bis 0,5 Stunden zudosiert werden können. Bei einer besonders bevorzugten Ausführungsform des erfindungsgemäßen Verfahrens wird der Katalysator in Lösung vorgelegt und die entsprechende Menge Monomer sowie der Reaktionsbeschleuniger I während der Sauerstoffbegasung zudosiert.

Wenn das gewünschte Molekulargewicht des Polymeren erreicht ist, enthält die Reaktionslösung 1 bis 30 Gew.-% Polyphenylenether, 0,005 bis 1,5 Gew.-% Metallionen und etwa 0,1 bis 6,0 Gew.-% Amin sowie gegebenenfalls geringe Mengen anderer Materialien. Diese Reaktionslösungen werden mit komplexbildenden Verbindungen, wie z. B. den Natriumsalzen der Ethylendiamintetraessigsäure, der Nitrilotriessigsäure oder anderer Aminocarbonsäuren zur Abtrennung des im Polymeren enthaltenden Metallkatalysators behandelt. Die Art und Weise der Zugabe der Komplexierungsmittel ist dabei unkritisch. So können die komplexbildenden Verbindungen in Substanz ebenso wie in wäßriger Lösung in Form ihrer Alkali- oder Erdalkalisalze hinzugegeben werden. Die Zugabe kann auf einmal oder in mehreren Anteilen, kontinuierlich oder diskontinuierlich, mit und ohne zusätzliches Wasser erfolgen. Die Abtrennung der Metallkomponente kann dabei in geeigneten Verfahrensvorrichtungen, z. B. in Filterpressen, in Dekantationstanks, Schälzentrifugen, Extraktionskolonnen, Mixern oder Settlerkaskaden vorgenommen werden.

Der Molekulargewichtsregler wird üblicherweise nach den obigen Methoden der Katalysatorabtrennung mitentfernt, wobei der nach dem erfindungsgemäßen Verfahren hergestellte Polyphenylenether keine nennenswerte Gehalte an Säuren mehr aufweist.

Die Kontaktzeit des komplexbildenden Agens mit der Polyphenylenether-Phase kann innerhalb weiter Grenzen variieren. Bevorzugt werden Reaktionszeiten von 1 Minute bis 5 Stunden. Häufig genügen Reaktionszeiten von 5 bis 30 Minuten. Die bevorzugte Reaktionstemperatur liegt zwischen 25 und 80°C, es sind jedoch auch Temperaturbereiche darunter und darüber anwendbar.

Die Abtrennung der Metallkatalysatoren bis zur vollständigen Entfernung aus dem Polyphenylenether-Polymeren kann durch mehrfache Zugabe der komplexbildenden Verbindung und anschließende Abtrennung der resultierenden Metallkomplexe gemäß der bereits beschriebenen Verfahren erfolgen. Bevorzugt wird jedoch eine Ausführungsform der Erfindung, wonach die gesamte Katalysatormenge sowie Reaktionsbeschleunigermenge in einem Komplexier- und Separierschritt aus dem Polymeren entfernt wird.

Nach der Entfernung der metallischen Komponenten als Komplex kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z. B. der Polyphenylenether durch Ausfällen aus einer Reaktionslösung mittels einem Antilösungsmittel, wie beispielsweise einem Überschuß von einem Alkohol, z. B. Methanol, isoliert werden. Das filtrierte Produkt kann im Alkohol aufgeschlämmt und - falls gewünscht - mit einem Entfärbungsmittel gerührt und anschließend abfiltriert werden und im Anschluß nach herkömmlichen Verfahren in Filme, Fasern, ausgeformte Gegenstände verarbeitet werden. Andere Alkohole wie Isopropanol, Propanol oder Ethanol können ebenfalls verwendet werden.

4

Die Aminkomponente des Katalysators kann durch Destillation oder nach anderen herkömmlichen Verfahren zurückgewonnen werden.

Die nach dem erfindungsgemäßen Verfahren hergestellten Polyphenylenether sind für alle Zwecke brauchbar, die in den vorgenannten Hay-Patenten aufgeführt sind. Beispielsweise können sie für ausgeformte Gegenstände oder für Filme, Bänder und dergleichen Anwendung finden. Sie können mit anderen Harzen oder verschiedenartigen Füllstoffen, Verstärkungsmitteln, Farbstoffen, Pigmenten, Stabilisatoren, Weichmachern und dergleichen gemischt werden.

Nach dem erfindungsgemäßen Verfahren werden Polyphenylenether mit definiertem Molekulargewicht erhalten. Außerdem hat das erfindungsgemäße Verfahren den Vorteil, daß Reaktionszeiten und Ausbeuten die Effektivität nicht beeinflussen. Insbesondere können mit den erfindungsgemäßen Reglern niedermolekulare PPE's in hoher Ausbeute erhalten werde, welche einen geringen Gehalt an Diphenochinonen (< 0,5 %) und eine helle Eigenfarbe aufweisen.

Beispiele

allgemeine Arbeitsweise:

In einem 2 l-Reaktionsgefäß wurden 1,32 g CuCl (13,3 mmol), 1,60 g KBr (13,4 mmol) und 22,5 ml n-Dibutylamin (133 mmol) in 500 ml Toluol aufgeschlämmt und 30 min. mit Sauerstoff gesättigt. Die Lösung wurde auf eine Temperatur von 20 - 22°C temperiert. Die entsprechende Säuremenge (siehe Tabelle) wurde in 80 ml Methanol gelöst und in die Reaktionslösung zudosiert. Anschließend wurde die Monomerlösung - bestehend aus 1 Mol 2,6-Dimethylphenol (123 g) und 6,1 ml Methyl-tri-n-octylammoniumchlorid (1,33 mmol) in 500 ml Toluol - zugegeben. Die Lösung wurde weitere 1,5 h unter Sauerstoffeinleitung gerührt, wobei die Temperatur auf 30°C anstieg. Die Reaktion wurde durch Zugabe von 40 ml 20 %iger EDTA-Lösung gestoppt. Die in 5 l Methanol gefällten Polymeren wurden bei 80°C getrocknet und viskosimetrisch vermessen.

Molekulargewichtsbestimmung:

Die angegebenen Viskositätswerte sind inhärente Viskositäten, gemessen bei 25°C in Toluol (Konzentration = 1 Gew.-%).

Die angegebenen Molekulargewichte wurden aus den Viskositätswerten und den K- und a-Werten gemäß folgender Gleichung berechnet:

$$M = (\eta_{inh.}/K)^{1/a}$$

Hierbei ist K = 2,85 * 10$^{-4}$ und a = 0,68 (Lit.: J.M. Barrales-Rienda, D.C. Pepper, Journal of Polymer Science B4, 939 (1966)).

Tabelle

| Beispiel | DMP/g | Ausbeute/% | Regler/Äquiv. | Viskosität/dl/g | Molekulargew. |
|---|---|---|---|---|---|
| 1* | 123,3 | 95 | 0,0 | 0,321 | 30800 |
| 2 | 121,8 | 96 | 0,1[3] | 0,310 | 29200 |
| 3 | 124,4 | 95 | 0,5[3] | 0,252 | 21600 |
| 4 | 125,4 | 95 | 1,0[3] | 0,178 | 12900 |
| 5 | 124,1 | 87 | 2,0[3] | 0,085 | 4400 |
| 6 | 123,7 | 91 | 1,0[1] | 0,087 | 4500 |
| 7 | 121,9 | 83 | 1,0[2] | 0,303 | 28300 |
| 8**) | 123,0 | 89 | 0,5 | 0,314 | 30200 |
| 9***) | 124,5 | 90 | 0,5 | 0,330 | 31700 |

3) Regler = Fumarsäure
1) Regler = Acrylsäure
2) Regler = Bernsteinsäure
**) Vergleichsbeispiel gemäß US 3 440 217, Regler ist 2,4,6-Trimethylphenol
***) Vergleichsbeispiel gemäß EP 113 430, Regler ist 2,6-Dibromphenol
*) zum Vergleich

Die Vergleichsbeispiele zeigen von einer geringen Ausbeute abgesehen eine deutlich bessere Effektivität der erfindungsgemäßen Molekulargewichtsregler. In den Vergleichsbeispielen 8 und 9 wird das Molekulargewicht von den Reglerzusätzen kaum gegenüber dem Vergleichsbeispiel 1 (Standardversuch) verändert. Die gleiche Menge an z.B. Fumarsäure in Beispiel 3 zeigt einen erheblichen Einfluß des Reglers auf die Höhe des entstehenden Molekulargewichtes.

**Patentansprüche**

1. Verfahren zur Herstellung von Polyphenylenethern aus einwertigen Phenolen, die in den beiden ortho-Stellungen oder zusätzlich in einer meta-Position, nicht aber in para-Stellung Alkylsubstituenten aufweisen durch oxidative Kupplung mit sauerstoffhaltigen Gasen in Gegenwart eines Oxidationskatalysators und einer Verbindung, welche das Molekulargewicht regelt, in organischen Lösungsmitteln, dadurch gekennzeichnet, daß man als Molekulargewichtsregler eine aliphatische, aromatische oder cycloaliphatische Mono- oder Dicarbonsäure mit 1 bis 24 C-Atomen verwendet.

2. Verfahren nach Anspruch 1, dadurch gekennzeichnet, daß man den Molekulargewichtsregler in Mengen von 0,01 bis 10 Mol-Äquivalenten, bezogen auf 1 mol Kupfer im Katalysator einsetzt.

3. Verfahren nach den Ansprüchen 1 oder 2, dadurch gekennzeichnet, daß man eine ein- oder mehrfach ungesättigte oder gesättigte Mono- oder Dicarbonsäure verwendet.

4. Verfahren nach den Ansprüchen 1 bis 3, dadurch gekennzeichnet, daß die gesättigte Dicarbonsäure Bernsteinsäure ist.

5. Verfahren nach den Ansprüchen 1 bis 3, dadurch gekennzeichnet, daß die ungesättigte Monocarbonsäure Acrylsäure oder Methacrylsäure oder deren Mischungen ist.

6. Verfahren nach den Ansprüchen 1 bis 3, dadurch gekennzeichnet, daß die ungesättigte Dicarbonsäure Maleinsäure oder Fumarsäure oder deren Mischungen ist.